# EUROPEAN PATENT APPLICATION

(11) **EP 3 982 008 A1**
(43) Date of publication of application: **13.04.2022**
(21) Application number: 20201277.9
(22) Date of filing: 12.10.2020
(51) Int. Cl.: F16H 57/04

(54) **A GEAR SYSTEM AND A METHOD FOR LUBRICATING A GEAR**

(71) Applicant: Moventas Gears Oy, 40101 Jyväskylä (FI)
(72) Inventor: VUOLLE-APIALA, Tuomas, 40701 JYVÄSKYLÄ (FI); HEINO, Juha, 40701 JYVÄSKYLÄ (FI)
(74) Representative: Väänänen, Janne Kalervo

(57) **Abstract**

A gear system comprises at least one gear stage (103), a pump system (104) and oil channels (105) for circulating a first lubricant oil flow via first elements (107a-107c) of the gear stage and a second lubricant oil flow via second elements (109) of the gear stage, and an oil conditioning system (106) for controlling temperatures (T1, T2) of the first and second lubricant oil flows so that the temperatures of the first and second lubricant oil flows are different from each other and flow rates (F1, F2) of the first and second lubricant oil flows are different from each other. Thus, it is possible to utilize for example the fact that bearings do not need as much oil flow as gear wheels but, on the other hand, lowering oil temperature of the bearings provides more advantages than lowering oil temperature of the gear wheels.

## Description

### Field of the disclosure

The disclosure relates to a method for lubricating a gear that can be, for example but not necessarily, a planetary gear. Furthermore, the disclosure relates to a gear system that comprises one or more gear stages such as, for example but not necessarily, one or more planetary gear stages.

### Background

Many gear systems are provided with a pump that is configured to circulate lubricant oil via gear wheels of the gear system as well as via bearings of the gear system. In addition to the pump, the gear system may further comprise a cooler for cooling the lubricant oil in order to control temperatures of the gear wheels and the bearings as well as to keep the temperature of the lubricant oil in a range where the viscosity of the lubricant oil is suitable for properly lubricating the gear wheels and the bearings. Furthermore, the gear system may comprise a heater for warming the lubricant oil during a starting phase of the gear system so as to make the lubricant oil capable of being pumped and capable of properly lubricating the gear wheels and the bearings of the gear system. A challenge related to the above-described gear system is that different elements or parts of the gear system may have different requirements concerning the temperature and/or the viscosity of the lubricant oil.

Publication JPH0861470 describes a gear system that comprises a low-speed stage where it is advantageous that viscosity of lubricant oil is high and a high-speed stage where it is advantageous that the viscosity of the lubricant oil is low. The gear system comprises a pump for circulating a first lubricant oil flow via the low-speed stage and a second lubricant oil flow via the high-speed stage. These two lubricant oil flows are arranged to have different temperatures so that both the first and second lubricant oil flows are cooled with a cooler and thereafter the second lubricant oil flow is heated with a heater to reduce the viscosity of the lubricant oil supplied to the high-speed stage. Publication JPH0861470 describes also a gear system where the first lubricant oil flow is further cooled with an additional cooler. An inconvenience related to the gear system described in publication JPH0861470 is that temperature of the lubricant oil which is optimal for gear wheels is not necessarily optimal for e.g. bearings and vice versa when e.g. costs of an oil cooling system are under consideration.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the term gear wheel means a cogged, rotating machine part. Two or more meshing gear wheels constitute a gear stage. The term gear as such refers in this document to a mechanical system having a first shaft and a second shaft, between which one or more gear stages provide speed and torque conversions and/or a change in a direction of a rotation axis. A gear system comprises a gear proper and a lubrication system. Furthermore, gear system may comprise auxiliary augmenting systems, such as e.g. instrumentation, control, and/or monitoring systems.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the present invention, there is provided a new gear system that comprises:
- a first shaft and a second shaft for connecting to a mechanical system external to the gear system,
- at least one gear stage configured to transfer mechanical power between the first and second shafts,
- a pump system and oil channels configured to circulate lubricant oil via elements of the gear stage, a first lubricant oil flow being circulated via first elements of the gear stage and a second lubricant oil flow being circulated via second elements of the gear stage, and
- an oil conditioning system configured to control first temperature of the first lubricant oil flow supplied to the gear stage and to control second temperature of the second lubricant oil flow supplied to the gear stage.

The oil conditioning system is configured to control the first and second temperatures to be different from each other. Furthermore, the pump system, the oil channels, and the oil conditioning system are configured to maintain a situation in which a first flow rate of the first lubricant oil flow and a second flow rate of the second lubricant oil flow are different from each other. Thus, it is possible to utilize the fact that different elements of the gear stage may have different needs concerning the temperature and/or the flow rate of the lubricant oil. It is also possible that temperatures and flow rates of three or more lubricant oil flows are controlled individually.

In a gear system according to an exemplifying and non-limiting embodiment, the above-mentioned first elements of the gear stage are gear wheels of the gear stage, the above-mentioned second elements of the gear stage are bearings of the gear stage, and the pump system, the oil channels, and the oil conditioning system are configured to maintain a situation in which the above-mentioned first flow rate is greater than the above-mentioned second flow rate and the above-mentioned second temperature is lower than the above-mentioned first temperature. This exemplifying gear system utilizes the fact that the bearings do not need as much lubricant oil flow as needed by the gear wheels but, on the other hand, lowering the lubricant oil temperature of the bearings provides more advantages than lowering the lubricant oil temperature of the gear wheels. Lowering the lubricant oil temperature of the bearings lengthens the lifetime of the bearings and/or allows a use of smaller bearings, which provide cost savings. On the other hand, an oil cooler system can be smaller and thereby more costs effective because most of the lubricant oil is directed to the gearwheels and not cooled as much as the lubricant oil directed to the bearings.

In accordance with the present invention, there is provided also a new method for lubricating a gear. A method according to the invention comprises:
- circulating a first lubricant oil flow via first elements of the gear and a second lubricant oil flow via second elements of the gear, and
- controlling first temperature of the first lubricant oil flow supplied to the gear and second temperature of the second lubricant oil flow supplied to the gear.

The first and second temperatures are controlled to be different from each other, and furthermore a first flow rate of the first lubricant oil flow and a second flow rate of the second lubricant oil flow are different from each other.

Various exemplifying and non-limiting embodiments are described in accompanied dependent claims.

Exemplifying and non-limiting embodiments both as to constructions and to methods of operation, together with additional objects and advantages thereof, will be best understood from the following description of specific exemplifying embodiments when read in conjunction with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1 illustrates a gear system according to an exemplifying and non-limiting embodiment,
figures 2 illustrate a gear system according to another exemplifying and non-limiting embodiment, and
figure 3 shows a flowchart of a method according to an exemplifying and non-limiting embodiment for lubricating a gear.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

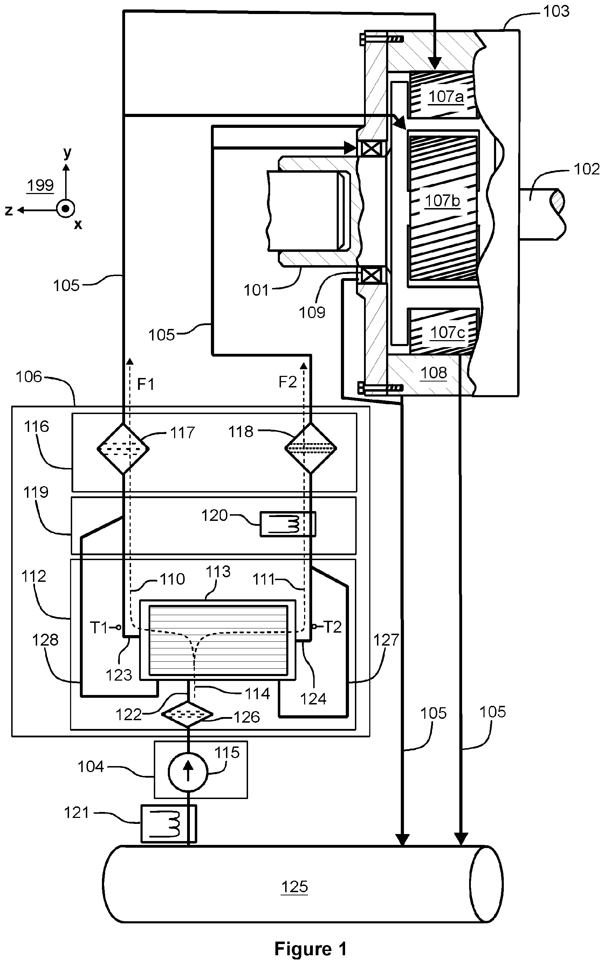

Figure 1 illustrates a gear system according to an exemplifying and non-limiting embodiment. The gear system comprises a first shaft 101 and a second shaft 102 for connecting to a mechanical system external to the gear system. The external mechanical system may comprise, for example but not necessarily, a wind turbine that can be connected to the shaft 101 and a generator that can be connected to the shaft 102, i.e. the gear system can be for example a gear system suitable for a wind power application. The gear system comprises a gear stage 103 configured to transfer mechanical power between the shafts 101 and 102. In figure 1, the gear stage 103 is presented as a partial section view where a geometric section plane is parallel with the yz-plane of a coordinate system 199. In this exemplifying case, the gear stage 103 is a planetary gear stage that comprises a gear ring 108, a sun wheel, and planet wheels meshing with the gear ring 108 and with the sun wheel. In figure 1, three of the planet wheels are denoted with references 107a, 107b, and 107c. The sun wheel is not shown in figure 1. It is also possible that a gear system according to an exemplifying and non-limiting embodiment comprises for example two or more planetary gear stages, one or more cylindrical gear stages, one or more conical gear stages, or a combination of gear stages of the kind mentioned above. The exemplifying gear system illustrated in figure 1 comprises an oil tank that constitutes a lubricant oil room 125 for storing lubricant oil of the gear system. For storing the lubricant oil there can be, instead of or in addition to the oil tank, an oil sump constituted by a casing of the gear stage 103.

The gear system comprises a pump system 104 and oil channels configured to circulate the lubricant oil via elements of the gear stage 103 so that a first lubricant oil flow is circulated via first elements of the gear stage 103 and a second lubricant oil flow is circulated via second elements of the gear stage 103. In figure 1, some of the oil channels are denoted with a reference 105, the first lubricant oil flow is depicted with a dashed line arrow 110, and the second lubricant oil flow is depicted with a dashed line arrow 111. The gear system comprises an oil conditioning system 106 configured to control first temperature T1 of the first lubricant oil flow 110 supplied to the gear stage 103 and to control second temperature T2 of the second lubricant oil flow 111 supplied to the gear stage 103 so that the first and second temperatures T1 and T2 are different from each other. The pump system 104, the oil channels 105, and the oil conditioning system 106 are configured to maintain a situation in which a first flow rate F1 of the first lubricant oil flow 110 and a second flow rate F2 of the second lubricant oil flow 111 are different from each other. Thus, it is possible to utilize a fact that different elements of the gear stage 103 may have different needs concerning the temperature and/or the flow rate of the lubricant oil. The above-mentioned first and second flow rates F1 and F2 express volume or mass of lubricant oil transferred within a time period having a predetermined length, e.g. liters per minute or kilograms per hour.

In the exemplifying gear system illustrated in figure 1, the first elements of the gear stage 103 are the gear wheels of the gear stage i.e. the sun wheel, the planet wheels, and the gear ring 108, and the second elements of the gear stage 103 are bearings of the gear stage 103. In figure 1, one of the bearings is denoted with a reference 109. The oil conditioning system 106 comprises a cooler system 112 that is configured to cool the first lubricant oil flow 110 directed to the gear wheels and the second lubricant oil flow 111 directed to the bearings. In this exemplifying case, the pump system 104, the oil channels 105, and the oil conditioning system 106 are advantageously configured to maintain a situation in which the above-mentioned first flow rate F1 is greater than the above-mentioned second flow rate F2 and the above-mentioned second temperature T2 is lower than the above-mentioned first temperature T1. Therefore, this exemplifying gear system is arranged to utilize the fact that the bearings do not need as much lubricant oil flow as needed by the gear wheels but, on the other hand, lowering the lubricant oil temperature of the bearings provides more advantages, such as e.g. a longer life time of the bearings, than lowering the lubricant oil temperature of the gear wheels. The flow rate F2 of the lubricant oil supplied to the bearings can be e.g. at most 90 % or 80 % of the flow rate F1 of the lubricant oil supplied to the gear wheels. The temperature T1 of the lubricant oil supplied to the gear wheels can be e.g. 60°C, and the temperature T2 of the lubricant oil supplied to the bearings can be e.g. 50°C.

In the exemplifying gear system illustrated in figure 1, the cooler system 112 comprises a cooler element 113 that divides a flow 114 of the lubricant oil into the first and second lubricant oil flows 110 and 111 and cools the first and second lubricant oil flows 110 and 111. The pump system 104 comprises an oil pump 115 configured to supply the lubricant oil to the cooler element 113. The cooler element 113 comprises an inlet 122 and outlets 123 and 124. The inlet 122 and the outlets 123 and 124 can be arranged for example so that the first lubricant oil flow 110 travels a shorter path in the cooler element 113 than the second lubricant oil flow 111 does. It is however also possible to adjust a flow rate ratio between the first and second lubricant oil flows 110 and 111 in many different ways instead of or in addition to adjusting the lengths of the flow paths inside the cooler element 113. For example, the flow rate ratio can be adjusted by selecting suitable nozzles which conduct the first and second lubricant oil flows into the gear stage 103. As the flow rate of the second lubricant oil flow 111 is smaller than that of the first lubricant oil flow 110, the second lubricant oil flow 111 is cooled more than the first lubricant oil flow 110. In the exemplifying case illustrated in figure 1, a flow resistance from the inlet 122 to the outlet 123 can be smaller than a flow resistance from the inlet 122 to the outlet 124. In this exemplifying case, the cooler element 113 tends to maintain a situation in which the first flow rate F1 of the first lubricant oil flow 110 is greater than the second flow rate F2 of the second lubricant oil flow 111. It is to be noted that the division of the lubricant oil flow 114 between the first and second lubricant oil flows 110 and 111 is determined not only by the cooler element 113 but also by the other elements of the gear system so that a total pressure drop on a whole flow path of the first lubricant oil flow 110 from the outlet of the oil pump 115 through the gear stage 103 to the lubricant oil room 125 is the same as a total pressure drop on a whole flow path of the second lubricant oil flow 111 from the outlet of the oil pump 115 through the gear stage 103 to the lubricant oil room 125, wherein the total pressure drop equals a pressure rise generated by the oil pump 115. The oil pump 115 can be driven for example with an electric motor that can be e.g. an alternating current "AC" motor. The AC motor can be energized and controlled with e.g. a frequency converter so that the flow rate of the lubricant oil flow 114, i.e. F1 + F2, is kept on a desired level. It is also possible to use a mechanically driven oil pump that is driven by mechanical power taken out e.g. from the gear stage 103, or there can be two or more oil pumps each of which can be an electrically or mechanically driven oil pump.

In the exemplifying gear system illustrated in figure 1, the oil conditioning system 106 comprises a filter 126 configured to remove impurities from the lubricant oil supplied to the cooler element 113.

In the exemplifying gear system illustrated in figure 1, the oil conditioning system 106 further comprises a filter system 116 configured to remove impurities from the lubricant oil supplied to the gear stage 103. In this exemplifying case, the filter system 116 comprises a first filter 117 configured to remove impurities from the first lubricant oil flow 110 and a second filter 118 configured to remove impurities from the second lubricant oil flow 111. As purity of the lubricant oil is important especially in bearings, the second filter 118 is advantageously such that it can remove smaller particles than the first filter 117. On the other hand, a flow resistance of the second filter 118 can be allowed to be greater than that of the first filter 117 because the bearings do not need as much lubricant oil flow as needed by the gear wheels.

In the exemplifying gear system illustrated in figure 1, the oil conditioning system 106 comprises bypass lines 127 and 128 which make it possible to conduct the first and/or second lubricant oil flows 110 and 111 to the gear stage 103 so that the cooling is bypassed. Valves for selecting the bypass lines 127 and 128 into use are not shown in figure 1. The valves can be e.g. thermostat-controlled valves.

In the exemplifying gear system illustrated in figure 1, the oil conditioning system 106 further comprises a controllable heater system 119 configured to warm at least one of the first and second lubricant oil flows 110 and 111. The heating of the lubricant oil can be needed to ensure proper lubrication of critical components such as e.g. bearings and/or gear teeth of high-speed gear wheels. In this exemplifying case, the controllable heater system 119 comprises a heater element 120 for warming the second lubricant oil flow 111 directed to the bearings. It is also possible that the heater element 120 is located on the bypass line 127. The heater element 120 can be used e.g. during a starting phase of the gear system to ensure that the viscosity of the lubricant oil supplied to the bearings is low enough to provide appropriate lubrication. In the meshes between the gear wheels, the oil temperature is typically not as critical as in the bearings and thus in the exemplifying gear system illustrated in figure 1 the controllable heater system 119 does not comprise a heater element for warming the first lubricant oil flow 111 directed to the gear wheels. Furthermore, in some cases, the gear system has lubricant oil in an oil sump and this lubricant oil lubricates the teeth of gear wheels of the gear system e.g. during a cold start. The exemplifying gear system illustrated in figure 1 comprises a heater element 121 at an intake side of the oil pump 115. The heater element 121 is suitable for warming the lubricant oil during a starting phase of the gear system to make the lubricant oil capable of being pumped and capable of properly lubricating the gear wheels. It suffices that the whole lubricant oil flow 114 is warmed to be capable of being pumped and capable of properly lubricating the gear wheels because the second lubricant oil flow 111 directed to the bearings can be further warmed with the heater element 120 to be capable of properly lubricating the bearings. Thus, the whole lubricant oil flow 114 can be colder than the second lubricant oil flow 111 and thereby heating energy can be saved. The main purpose of the heater element 120 is however to ensure proper lubrication of critical components of the gear system. The heater element 121 can be as well an immersion heater that is inside the lubricant oil room 125.

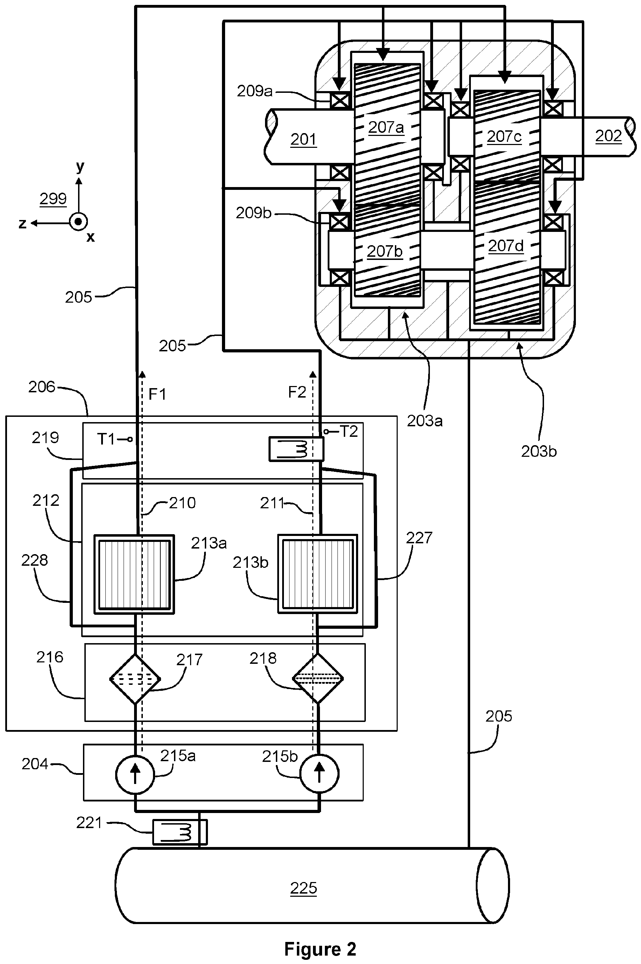

Figure 2 illustrates a gear system according to an exemplifying and non-limiting embodiment. The gear system comprises a first shaft 201 and a second shaft 202 for connecting to a mechanical system external to the gear system. The gear system comprises two gear stages 203a and 203b configured to transfer mechanical power between the shafts 201 and 202. In figure 2, the gear stages 203a and 203b are presented as a partial section view where a geometric section plane is parallel with the yz-plane of a coordinate system 299. The gear stage 203a comprises gear wheels 207a and 207b, and the gear stage 203b comprises gear wheels 207c and 207d. The gear system comprises an oil tank that constitutes a lubricant oil room 225 for storing lubricant oil of the gear stages 203a and 203b. For storing the lubricant oil there can be, instead of or in addition to the oil tank, an oil sump constituted by a casing of the gear stages 203a and 203b.

The gear system comprises a pump system 204 and oil channels configured to circulate the lubricant oil via the gear stages 203a and 203b so that a first lubricant oil flow is circulated via the gear wheels 207a-207d and a second lubricant oil flow is circulated via bearings of the gear stages 203a and 203b . In figure 2, some of the oil channels are denoted with a reference 205, two of the bearings are denoted with references 209a and 209b, the first lubricant oil flow is depicted with a dashed line arrow 210, and the second lubricant oil flow is depicted with a dashed line arrow 211. The gear system comprises an oil conditioning system 206 configured to control first temperature T1 of the first lubricant oil flow 210 supplied to the gear stages 203a and 203b and to control second temperature T2 of the second lubricant oil flow 211 supplied to the gear stages 203a and 203b so that the first and second temperatures T1 and T2 are different from each other. The pump system 204, the oil channels 205, and the oil conditioning system 206 are configured to maintain a situation in which a first flow rate F1 of the first lubricant oil flow 210 and a second flow rate F2 of the second lubricant oil flow 211 are different from each other. Thus, it is possible to utilize a fact that different elements of the gear stages 203a and 203b may have different needs concerning the temperature and/or the flow rate of the lubricant oil.

In the exemplifying gear system illustrated in figure 2, the oil conditioning system 206 comprises a cooler system 212 that is configured to cool the first lubricant oil flow 210 directed to the gear wheels and the second lubricant oil flow 211 directed to the bearings. In this exemplifying case, the pump system 204, the oil channels 205, and the oil conditioning system 206 are advantageously configured to maintain a situation in which the above-mentioned first flow rate F1 is greater than the above-mentioned second flow rate F2 and the above-mentioned second temperature T2 is lower than the above-mentioned first temperature T1. Therefore, this exemplifying gear system is arranged to utilize the fact that the bearings do not need as much lubricant oil flow as needed by the gear wheels but, on the other hand, lowering the lubricant oil temperature of the bearings provides more advantages, such as e.g. a longer life time of the bearings, than lowering the lubricant oil temperature of the gear wheels. The flow rate F2 of the lubricant oil supplied to the bearings can be e.g. at most 90 % or 80 % of the flow rate F1 of the lubricant oil supplied to the gear wheels. The temperature T1 of the lubricant oil supplied to the gear wheels can be e.g. 60°C, and the temperature T2 of the lubricant oil supplied to the bearings can be e.g. 50°C.

In the exemplifying gear system illustrated in figure 2, the cooler system 212 comprises a first cooler element 213a configured to cool the first lubricant oil flow 210 and a second cooler element 213b configured to cool the second lubricant oil flow 211. The pump system 204 comprises a first oil pump 215a configured to supply the first lubricant oil flow 210 to the first cooler element 213a and a second oil pump 215b configured to supply the second lubricant oil flow 211 to the second cooler element 213b. The first oil pump 215a can be driven for example with an electric motor that can be e.g. an alternating current "AC" motor. The AC motor can be energized and controlled with e.g. a frequency converter so that the first flow rate F1 of the first lubricant oil flow 210 is kept on a desired level. For maintaining the first lubricant oil flow 210, it is also possible to use a mechanically driven oil pump that is driven by mechanical power taken out e.g. from the gear stage 203a or 203b. For maintaining the first lubricant oil flow 210, there can be two or more oil pumps each of which can be an electrically or mechanically driven oil pump. Correspondingly, the second oil pump 215b can be driven with an AC motor that is energized and controlled with a frequency converter so that the second flow rate F2 of the second lubricant oil flow 211 is kept on a desired level. For maintaining the second lubricant oil flow 211, it is also possible to use a mechanically driven oil pump that is driven by mechanical power taken out e.g. from the gear stage 203a or 203b. For maintaining the second lubricant oil flow 211, there can be two or more oil pumps each of which can be an electrically or mechanically driven oil pump.

It is also possible to use a single oil pump for maintaining both the first and second lubricant oil flows 210 and 211. The division of the total flow into the first and second lubricant oil flows 210 and 211 can be implemented by adapting flow resistances of the flow paths of the first and second lubricant oil flows 210 and 211.

In the exemplifying gear system illustrated in figure 2, the oil conditioning system 206 comprises bypass lines 227 and 228 which make it possible to conduct the first and/or second lubricant oil flows 210 and 211 to the gear stages 203a and 203b so that the cooling is bypassed. Valves for selecting the bypass lines 227 and 228 into use are not shown in figure 2. The valves can be e.g. thermostat-controlled valves.

In the exemplifying gear system illustrated in figure 2, the oil conditioning system 206 comprises a filter system 216 that comprises filters 217 and 218. The filter system 216 can be e.g. such as the filter system 116 shown in figure 1, and a controllable heater system 219 that can be e.g. such as the controllable heater system 119 shown in figure 1. It is also possible that a heater is located on the bypass line 227 and/or a heater is located on the bypass line 227. Furthermore, the exemplifying gear system illustrated in figure 2 comprises a heater element 221 at an intake side of the oil pumps 215a and 215b. The heater element 221 can be as well an immersion heater that is inside the lubricant oil room 225.

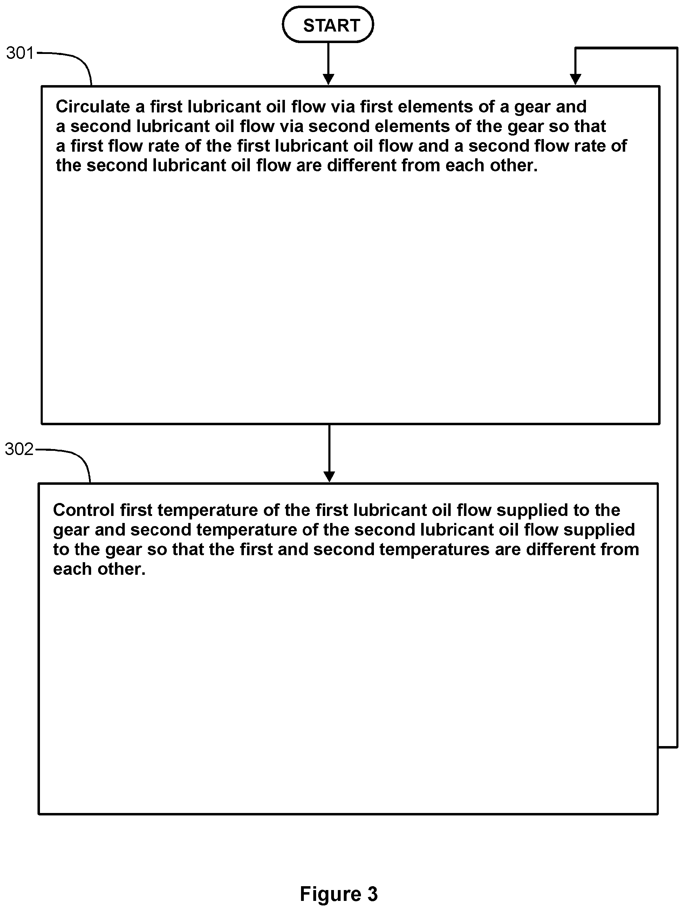

Figure 3 shows a flowchart of a method according to an exemplifying and non-limiting embodiment for lubricating a gear. The method comprises the following actions:
- action 301: circulating, with a pump system and oil channels, a first lubricant oil flow via first elements of the gear and a second lubricant oil flow via second elements of the gear so that a first flow rate of the first lubricant oil flow and a second flow rate of the second lubricant oil flow are different from each other, and
- action 302: controlling, with an oil conditioning system, first temperature of the first lubricant oil flow supplied to the gear and second temperature of the second lubricant oil flow supplied to the gear so that the first and second temperatures are different from each other.

In a method according to an exemplifying and non-limiting embodiment, the smaller one of the first and second flow rates is at most 90 % of the larger one of the first and second flow rates. In a method according to an exemplifying and non-limiting embodiment, the smaller one of the first and second flow rates is at most 80 % of the larger one of the first and second flow rates

In a method according to an exemplifying and non-limiting embodiment, the above-mentioned first elements of the gear are gear wheels and the above-mentioned second elements of the gear are bearings.

A method according to an exemplifying and non-limiting embodiment comprises controlling the first and second temperatures with a cooler system that cools the first and second lubricant oil flows. In a method according to an exemplifying and non-limiting embodiment, the first and second temperatures are controlled with a cooler element that divides a flow of the lubricant oil received at the cooler element into the first and second lubricant oil flows and cools the first and second lubricant oil flows. In a method according to another exemplifying and non-limiting embodiment, the first and second temperatures are controlled with a first cooler element that cools the first lubricant oil flow and with a second cooler element that cools the second lubricant oil flow. In this exemplifying case, two oil pumps can be used to supply the lubricant oil to the first and second cooler elements separately or a same oil pump can be used to supply the lubricant oil to both the first and second cooler elements. It is also possible that there are two or more oil pumps for maintaining the first lubricant oil flow, and correspondingly two or more oil pumps for maintaining the second lubricant oil flow.

A method according to an exemplifying and non-limiting embodiment comprises removing, with one or more filters, impurities from the lubricant oil supplied to the cooler system.

A method according to an exemplifying and non-limiting embodiment comprises removing impurities from the lubricant oil with a filter system. A method according to an exemplifying and non-limiting embodiment comprises removing impurities from the first lubricant oil flow with a first filter and removing impurities from the second lubricant oil flow with a second filter that is able to remove smaller particles than the first filter. Advantageously, the second filter is used to purify the lubricant oil supplied to the bearings of the gear because the bearings are typically more critical than the gear wheels concerning the purity of the lubricant oil.

The specific examples provided in the description given above should not be construed as limiting the scope and/or the applicability of the accompanied claims. Lists and groups of examples provided in the description given above are not exhaustive unless otherwise explicitly stated.

## Claims

1. A gear system comprising:
- a first shaft (101, 201) and a second shaft (102, 202) for connecting to a mechanical system external to the gear system,
- at least one gear stage (103, 203a, 203b) configured to transfer mechanical power between the first and second shafts,
- a pump system (104, 204) and oil channels (105, 205) configured to circulate a first lubricant oil flow (110, 210) via first elements (107a-107c, 108, 207a-207d) of the gear stage and a second lubricant oil flow (111, 211) via second elements (109, 209a, 209b) of the gear stage, and
- an oil conditioning system (106, 206) configured to control first temperature (T1) of the first lubricant oil flow supplied to the gear stage and to control second temperature (T2) of the second lubricant oil flow supplied to the gear stage,
wherein the oil conditioning system is configured to control the first and second temperatures to be different from each other, **characterized in that** the pump system (104, 204), the oil channels (105, 205), and the oil conditioning system (106, 206) are configured to maintain a situation in which a first flow rate (F1) of the first lubricant oil flow and a second flow rate (F2) of the second lubricant oil flow are different from each other.

2. A gear system according to claim 1, wherein the pump system, the oil channels, and the oil conditioning system are configured to maintain a situation in which a smaller one of the first and second flow rates is at most 90 % of a larger one of the first and second flow rates.

3. A gear system according to claim 1, wherein the pump system, the oil channels, and the oil conditioning system are configured to maintain a situation in which a smaller one of the first and second flow rates is at most 80 % of a larger one of the first and second flow rates.

4. A gear system according to any one of claims 1-3, wherein the pump system, the oil channels, and the oil conditioning system are configured to maintain a situation in which the first flow rate is greater than the second flow rate and the first temperature is higher than the second temperature.

5. A gear system according to any one of claims 1-4, wherein the first elements (107a-107c, 108, 207a-207d) of the gear stage are gear wheels of the gear stage.

6. A gear system according to any one of claims 1-5, wherein the second elements (109, 209a, 209b) of the gear stage are bearings of the gear stage.

7. A gear system according to any one of claims 1-6, wherein the oil conditioning system comprises a cooler system (112, 212) configured to cool the first lubricant oil flow and the second lubricant oil flow.

8. A gear system according to claim 7, wherein the oil conditioning system comprises one or more filters (126, 217, 218) configured to remove impurities from the lubricant oil supplied to the cooler system (112, 212).

9. A gear system according to claim 7 or 8, wherein the cooler system (112) comprises a cooler element (113) configured to divide a flow (114) of the lubricant oil received at the cooler element into the first and second lubricant oil flows (110, 111) and to cool the first and second lubricant oil flows.

10. A gear system according to claim 9, wherein the pump system (104) comprises an oil pump (115) configured to supply the lubricant oil to the cooler element.

11. A gear system according to claim 7, wherein the cooler system (212) comprises a first cooler element (213a) configured to cool the first lubricant oil flow and a second cooler element (213b) configured to cool the second lubricant oil flow.

12. A gear system according to claim 11, wherein the pump system (204) comprises a first oil pump (215a) configured to supply the first lubricant oil flow to the first cooler element and a second oil pump (215b) configured to supply the second lubricant oil flow to the second cooler element.

13. A gear system according to any one of claims 1-12, wherein the oil conditioning system comprises a filter system (116, 216) configured to remove impurities from the lubricant oil.

14. A gear system according to claim 13, wherein the filter system comprises a first filter (117, 217) configured to remove impurities from the first lubricant oil flow and a second filter (118, 218) configured to remove impurities from the second lubricant oil flow, the second filter being capable of removing smaller particles than the first filter.

15. A gear system according to any one of claims 1-14, wherein the oil conditioning system comprises a controllable heater system (119) configured to warm at least one of the first and second lubricant oil flows.

16. A method for lubricating a gear, the method comprising:
- circulating (301) a first lubricant oil flow via first elements of the gear and a second lubricant oil flow via second elements of the gear, and
- controlling (302) first temperature (T1) of the first lubricant oil flow supplied to the gear and second temperature (T2) of the second lubricant oil flow supplied to the gear,
wherein the first and second temperatures are controlled to be different from each other, **characterized in that** a first flow rate of the first lubricant oil flow and a second flow rate of the second lubricant oil flow are different from each other.

## Amended claims

### Amended claims in accordance with Rule 137(2) EPC.

1. A gear system comprising:
- a first shaft (101, 201) and a second shaft (102, 202) for connecting to a mechanical system external to the gear system,
- at least one gear stage (103, 203a, 203b) configured to transfer mechanical power between the first and second shafts,
- a pump system (104, 204) and oil channels (105, 205) configured to circulate a first lubricant oil flow (110, 210) via first elements (107a-107c, 108, 207a-207d) of the gear stage and a second lubricant oil flow (111, 211) via second elements (109, 209a, 209b) of the gear stage, and
- an oil conditioning system (106, 206) configured to control first temperature (T1) of the first lubricant oil flow supplied to the gear stage and to control second temperature (T2) of the second lubricant oil flow supplied to the gear stage,
wherein the oil conditioning system is configured to control the first and second temperatures to be different from each other, and the pump system (104, 204), the oil channels (105, 205), and the oil conditioning system (106, 206) are configured to maintain a situation in which a first flow rate (F1) of the first lubricant oil flow and a second flow rate (F2) of the second lubricant oil flow are different from each other, **characterized in that** the pump system, the oil channels, and the oil conditioning system are configured to maintain a situation in which the first flow rate is greater than the second flow rate and the first temperature is higher than the second temperature.

2. A gear system according to claim 1, wherein the pump system, the oil channels, and the oil conditioning system are configured to maintain a situation in which a smaller one of the first and second flow rates is at most 90 % of a larger one of the first and second flow rates.

3. A gear system according to claim 1, wherein the pump system, the oil channels, and the oil conditioning system are configured to maintain a situation in which a smaller one of the first and second flow rates is at most 80 % of a larger one of the first and second flow rates.

4. A gear system according to any one of claims 1-3, wherein the first elements (107a-107c, 108, 207a-207d) of the gear stage are gear wheels of the gear stage.

5. A gear system according to any one of claims 1-4, wherein the second elements (109, 209a, 209b) of the gear stage are bearings of the gear stage.

6. A gear system according to any one of claims 1-5, wherein the oil conditioning system comprises a cooler system (112, 212) configured to cool the first lubricant oil flow and the second lubricant oil flow.

7. A gear system according to claim 6, wherein the oil conditioning system comprises one or more filters (126, 217, 218) configured to remove impurities from the lubricant oil supplied to the cooler system (112, 212).

8. A gear system according to claim 6 or 7, wherein the cooler system (112) comprises a cooler element (113) configured to divide a flow (114) of the lubricant oil received at the cooler element into the first and second lubricant oil flows (110, 111) and to cool the first and second lubricant oil flows.

9. A gear system according to claim 8, wherein the pump system (104) comprises an oil pump (115) configured to supply the lubricant oil to the cooler element.

10. A gear system according to claim 6, wherein the cooler system (212) comprises a first cooler element (213a) configured to cool the first lubricant oil flow and a second cooler element (213b) configured to cool the second lubricant oil flow.

11. A gear system according to claim 10, wherein the pump system (204) comprises a first oil pump (215a) configured to supply the first lubricant oil flow to the first cooler element and a second oil pump (215b) configured to supply the second lubricant oil flow to the second cooler element.

12. A gear system according to any one of claims 1-11, wherein the oil conditioning system comprises a filter system (116, 216) configured to remove impurities from the lubricant oil.

13. A gear system according to claim 12, wherein the filter system comprises a first filter (117, 217) configured to remove impurities from the first lubricant oil flow and a second filter (118, 218) configured to remove impurities from the second lubricant oil flow, the second filter being capable of removing smaller particles than the first filter.

14. A gear system according to any one of claims 1-12, wherein the oil conditioning system comprises a controllable heater system (119) configured to warm at least one of the first and second lubricant oil flows.

15. A method for lubricating a gear, the method comprising:
- circulating (301) a first lubricant oil flow via first elements of the gear and a second lubricant oil flow via second elements of the gear, and
- controlling (302) first temperature (T1) of the first lubricant oil flow supplied to the gear and second temperature (T2) of the second lubricant oil flow supplied to the gear,
wherein the first and second temperatures are controlled to be different from each other, and a first flow rate of the first lubricant oil flow and a second flow rate of the second lubricant oil flow are different from each other, **characterized in that** the method comprises maintaining a situation in which the first flow rate is greater than the second flow rate and the first temperature is higher than the second temperature.
